# EUROPEAN PATENT APPLICATION

(11) **EP 0 534 923 A1**
(43) Date of publication of application: **31.03.1993**
(21) Application number: 92890159.4
(22) Date of filing: 30.06.1992
(51) Int. Cl.: B23K 1/005, H05B 3/00

(54) **Small sized heater of self cooling type**

(71) Applicant: Hybec Corporation, Tokyo (JP)
(72) Inventor: Hayakawa, Futomi, c/o Hybec Corporation, Chuo-ku, Tokyo (JP); Onoda, Kazuo, c/o Hybec Corporation, Chuo-ku, Tokyo (JP)
(74) Representative: Itze, Peter, Dipl.-Ing.

(57) **Abstract**

A sleeve which is provided with a motor casing containing a fan motor and a mirror casing containing a reflecting mirror is detachably inserted at its motor casing side into an outer cylinder having an air intake port where cooling air is forcibly sucked in through the air intake port and supplied to the reflecting mirror. A lamp base unified with a lamp is detachably mounted in the reflecting mirror by fixing means. The cooling air which is sucked in passes through air passages formed by fins provided on the outer peripheral surface of the reflecting mirror in the vertical direction and the mirror casing. An opening surface of the reflecting mirror is adapted to outwardly form an air exhaust port, which ensures that when the cooling air is exhausted from the air exhaust port, it is exhausted to a position that is situated away from the portion to be soldered so as to prevent the cooling air from having an adverse influence on the portion to be processed. Furthermore, the spot heater is of the self-cooling type, whereby it is provided with a compact design and light weight without necessitating a circulating arrangement for cooling water.

## Description

### FIELD OF THE INVENTION

The invention relates to a heat source used for soldering electronic components such as printed circuit boards and a flat packaged IC, for example, and, more particularly, to a spot heater of the self-cooling type with a compact design being capable of spot irradiating a high-temperature heat beam onto a portion to be soldered.

### BACKGROUND OF THE INVENTION

For carrying out a soldering operation between electronic components such as a printed circuit board and a flat packaged IC, for example, or between microelectronic components, a soldering device is known which blows hot air generated by a heater onto a portion to be soldered. Such a heat-generating device has a jet nozzle, for example, at the one end and it is provided with a hollow heater casing comprising an air intake port at the other end. In the heater casing are disposed a fan motor and a heater. The air sucked in by the fan motor is supplied to the heater for conversion to hot air, whereby the obtained hot air is adapted to flow rapidly from the jet nozzle onto the portion to be soldered.

Another heat-generating device comprises a jet nozzle at the one end and a hollow casing made from quartz glass having an air intake port at the other end. A heat coil is contained in the casing at a suitable distance therefrom and it is provided with a spiral shape with the help of reinforcing rings and it is suspended in such a way that the suspension situates the heat coil in the centre of the casing. The incoming air is supplied to the heater for conversion to hot air, whereby the obtained hot air is adapted to flow rapidly from the jet nozzle onto the portion to be soldered.

This heat-generating device, however, has difficulties in generating hot air of high temperature, because the hot air is produced by heat conversion on the heater. Consequently, whenever the portion to be soldered consists of a material requiring high temperatures for the soldering, the device cannot carry out the soldering operation. Additionally, as the hot air after leaving the jet nozzle is spouted in such a way that it widens towards the end averted from the jet nozzle, it heats not only the processing portion requiring the heating, but also the surrounding peripherial portion, whereby parts which are sensitive to the influence of heat and which are situated in said surrounding peripheral portion may be damaged by the influence of the heat, which impairs the reliability and quality of the manufactured products.

To provide the portion to be soldered with a more localized heating process, a heat-generating device has been developed recently which comprises a combined reflecting mirror with a reflecting surface provided with an elliptical shape and a halogen lamp. This device, which reflects the high-temperature light beam from the halogen lamp by means of the reflecting surface, is used for soldering special components requiring a large amount of heat such as the soldering of polyurethane wire or the like or heat processing of resin or the like. Such a device is disclosed, for example, in the U.S. Patent No. 4,720,617, No. 4,812,620 and No. 4,788,403.

Because the light beam reaches a temperature of more than 800°C, for example, in such a heat generating device, the device per se is subjected to a condition of high temperature with the reflecting efficiency of the beam being lowered due to the clouding of the reflecting surface. Therefore, to prevent the device from being subjected to a condition of high temperature, a structure is implemented which circulates cooling water within the device. However, this leads to a more complicated structure of the overall arrangement and makes it larger in size.

Therefore, whenever soldering is carried out with this large-sized device, it is very difficult to carry out the process of soldering while carrying this large-sized and heavy device by hand. In addition, whenever the device is to be placed on an automatic machine for automatic incorporation and soldering of a flat packaged IC on a printed circuit board, for example, it is not possible to equip an automatic machine with such a large-sized device because of lack of available space.

To solve such problems and disadvantages caused by the devices mentioned above, the inventors have succeeded, as a result of their various studies, in developing a device in which external air is forcibly sucked into a spot heater during the soldering operation, whereby the whole heater is prevented from increasing its temperature due to said air intake.

It is an object of the present invention to provide a small-sized spot heater of the self-cooling type which, unlike designs that circulate the cooling water in the spot heater, is adapted to prevent the rise in the temperature of the whole heater due to the external air sucked into the spot heater and which provides the whole device with a small size and light structure, so that it is rendered suitable for work by hand and suitable for equipping it on automatic machines which provide only a limited amount of available space.

It is another object of the present invention to provide a small-sized spot heater of the self-cooling type which is adapted to exhaust the external air sucked into the spot heater from the outside of said heater to a portion situated away from the portion to be processed and away from the circumferential portion of said heater so as to prevent an adverse influence by the hot air on the portion to be processed.

### MEANS FOR SOLVING THE PROBLEM

In order to achieve the objects in accordance with the invention as mentioned above, a spot heater of the self-cooling type, which is used for instant soldering of a portion to be processed by irradiating a light beam from a heat source placed in a reflecting surface of a reflecting mirror to said portion, is provided with a sleeve detachably inserted into an outer cylinder having an air intake port for cooling air, said sleeve being provided with a shape comprising openings at both ends and having a motor casing with a fan motor at the air intake port end and a mirror casing comprising said reflecting mirror at the opposite end; a large number of fins continuing in the outer radial direction of said reflecting mirror contained in said mirror casing and being formed in the vertical direction; air passages used for cooling and being in communication with said air intake port and defined by said cooling fins and said mirror casing along a vertical direction; a reflecting opening surface of said reflecting mirror adapted to project outwardly from an exhaust port of said air passage; a lamp base in which a lamp is fixed and which is detachably inserted into a lamp holding portion formed in said reflecting mirror; a fixing means for detachably fixing said lamp base to said reflecting mirror, whereby the high-temperature beam from the lamp is permitted to concentrate locally on the processing portion (portion to be soldered) and the cooling air is exhausted to a portion situated away from the portion to be soldered.

Accordingly, the high-temperature light beam irradiated from the heat source is reflected by the reflecting surface and emitted onto the portion to be soldered in form of high-temperature energy. This enables the device to process special components requiring a large amount of heat such as polyurethane wire and the like or heat processing of resin or the like. In addition, since it is unnecessary to circulate cooling water within the whole device, it is possible to keep the device small in size and weight, allowing the device to be installed at locations with limited available space such as automatic machines for automatic incorporation and soldering of flat packaged ICs on printed circuit boards, for example.

### BRIEF DESCRIPTION OF THE DRAWINGS

Figure 1 is a longitudinal cross-sectional view of a spot heater according to a first embodiment of the present invention;
Figure 2 is a cross-sectional view taken along line II-II in Figure 1;
Figure 3 is a partial cross-sectional front view showing a heat source of a type unit in which a lamp and a lamp base are unified;
Figure 4 is a longitudinal cross-sectional view showing a spot heater according to a second embodiment of the present invention, providing a guide piece on a glass retaining member;
Figure 5 is a longitudinal cross-sectional view showing a spot heater according to a third embodiment of the present invention, providing a handle thereon;
Figure 6 is a longitudinal cross-sectional view showing a spot heater according to a fourth embodiment of the present invention, allowing high-caloric energy to be generated.
Figure 7 is a plane view showing Fig. 6 as seen from above; and
Figure 8 is a longitudinal cross-sectional view showing a spot heater according to the fifth embodiment of the present invention, providing a guide piece on a glass retaining member.

### DETAILED DESCRIPTION OF THE INVENTION

The invention is now outlined below in greater detail by reference to the preferred embodiments, whereby the present invention shall not be considered as being limited by those described hereinunder.

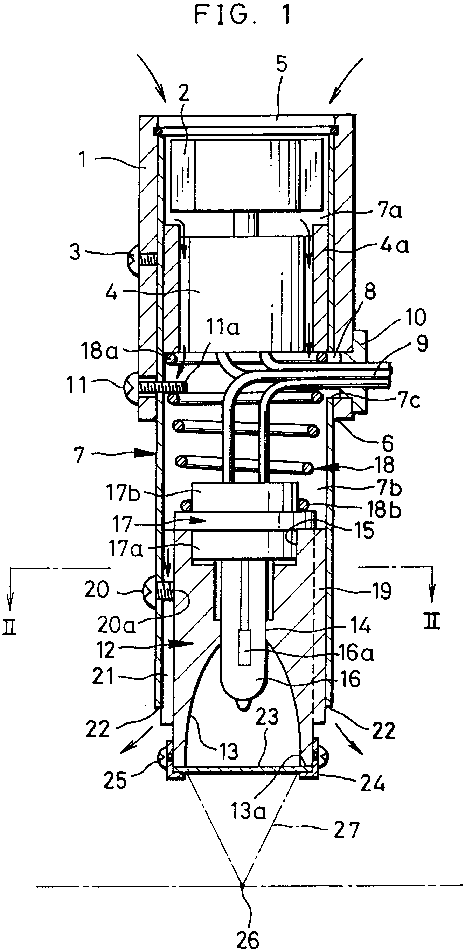

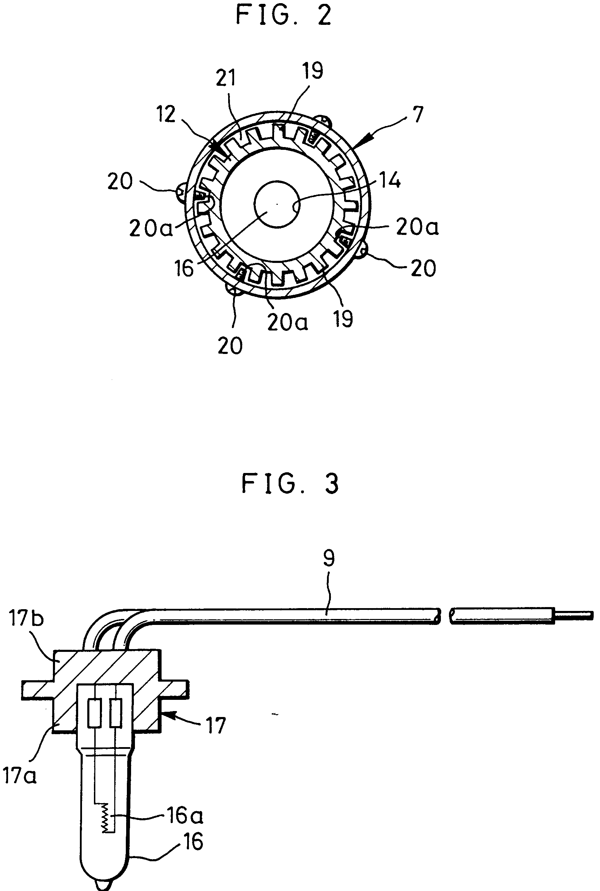

Description is made of a spot heater of a first embodiment of the present invention as illustrated in Figures 1 to 3. The small-sized spot heater of the self-cooling type according to the first embodiment is formed in its entirety in the shape of a bar which is suitable for work to be carried out by hand. Into an opening situated at both ends of outer cylinder 1 there is inserted a sleeve 7 which comprises, on the one hand, an upper half portion extending from a center portion thereof and forming a motor casing 7a for a fan motor 4 comprising a fan 2 and, on the other hand, a lower half portion forming a mirror casing 7b containing a reflecting mirror 12. On the fan motor 4 contained in the motor casing 7a is provided a fixing ring 4a on which a thread screw 3 penetrating the outer cylinder 1 sits close, thus fixing the fan motor to the motor casing 7a. External air for cooling, which is sucked in from an air intake port 5 of the outer cylinder and moves towards the fan 2, flows downwardly from above into the motor casing 7a as shown in Fig. 1.

An opening portion 8 is provided with a suitable size in the vicinity of opening portion 6 of the outer cylinder 1. An opening portion 7c is provided in the sleeve 7 at a position corresponding to the opening portion 8 and with a size which corresponds to that of the opening portion 8. Through these opening portions 7c, 8 are passed cords or the like which penetrate the packing material 10. The cords or the like 9 are used for connecting to a power supply the fan motor 4 and a near-infrared lamp or halogen lamp which are used as a heat source. The size of the opening portions 7c, 8 is formed relatively large to enable the insertion of fingers into them, so that it is possible to easily insert or pull out the cords or the like 9 when exchanging the lamp or carrying out similar work.

A stop screw 11 is screwed into the outer cylinder 1 close to the opening portion 6 of the sleeve 7, whereby the inner portion 11a of the stop screw 11 projects into the sleeve 7. On the reflecting mirror 12 contained in the mirror casing of sleeve 7 is disposed a bent reflecting surface 13. All the surfaces of the reflecting surface 13 are plated with gold in order to improve its reflecting efficiency. Reflecting mirror 12 is provided with a lamp insertion bore 14 situated on a vertical central axis and opening out into the reflecting surface 13. When a lamp 16, which constitutes the heat source, is inserted into lamp insertion bore 14, the lamp 16 is centered with respect to the reflecting surface 13, i.e., the inner diameter of the lamp insertion bore 14 is arranged in such a way that it is substantially equal to the outer diameter of lamp 16 or to a diameter slightly larger than it, so that when the lamp 16 is inserted into the lamp insertion bore 14, the vertical central axis of the lamp 16 is guided and held straight without any deviation.

The lamp insertion bore 14 opens out to an upper surface of the reflecting mirror 12 to form a concave recess 15 in which a lamp base 17 of a unit type which is unified with the lamp can be fitted. Because lamp 16 and lamp base 17 are of the unified type, the exchange of a lamp can be carried out very simply. The lamp base 17 is substantially formed in the shape of a cross and in Fig. 1 a lower projecting portion 17a is fitted into the recess 15 without forming a gap. Hence, because the lamp 16 is limited in the direction of its vertical central axis by means of the first limiting means of recess 15 and the projecting portion 17a and is further limited in the direction of its vertical central axis by means of a second limiting means, the vertical central axis is already centred by confining the lamp base in recess 15, which makes it possible to reflect the light beam at a fixed angle at all times.

A lamp retaining spring 18, which prevents the lamp 16 from slipping out of the lamp insertion bore 14 and which constitutes a fixing means for the lamp base 17, is provided with a conical shape in Fig. 1, so that the diameter at its upper end becomes larger than that of its lower end. The larger diameter of the lamp retaining spring 18 comes into contact with fan motor 4 and the smaller diameter engages into the projecting portion 17b of lamp base 17. The use of the conical spring shape allows the resilience of the spring to converge on the smaller diameter 18b, whereby the lamp base 17 is pressed and fixed to the reflecting mirror 12 due to the resilience of the lamp retaining spring 18. The larger diameter 18a of the lamp retaining spring 18 engages on the inner edge 11 a of the fixing screw 11, which makes the resilient force between the latter and the lamp base 17 stronger and holds it in a constant manner. Hence, since the lamp base 17 is held on the recess 15 with a specified pressure, the filament 16a of the lamp is always held at a specified position with respect to the reflecting surface 13, which always causes the light beam to be reflected under the same conditions.

The reflecting mirror 12 is provided with a large number of fins which extend in the circumferential direction towards it outer radial surface. Said fins extend in the vertical direction and form air passages between them, i.e., when the reflecting mirror 12 is inserted into the lamp case 7b, the free open surfaces of the air passages are encased by the inner surface of lamp casing 7b. Accordingly, a large number of air passages is formed on the outer peripheral surface of the reflecting mirror 12 extending in the vertical direction. When the reflecting mirror 12 is subjected to a high amount of heat due to the light beam, said mirror is cooled by means of the fins 21 with the cooling air flowing through air passages 21. This process cools the whole reflecting mirror 12, which continuously provides reflecting surface 13 in a clean condition without clouding by heat.

Fixing screws 20 are screwed into the outer surface of the mirror casing 7b. By forcedly pressing their inner end portions 20a onto the inner surfaces of the air passages 21, the reflecting mirror 12 is fixed in the mirror casing 7b. The opening surface 13a of the reflecting mirror 12 is situated farther outwardly from the air exhaust ports 22 of the air passages 21. Thus, when the cooling air which has passed the air passages 21 is exhausted through the air exhaust ports 22, it is exhausted to a position situated away from the portion 26 to be processed. Accordingly, only the light beam 27 is supplied in a spot shape to the portion 26 to be processed which requires the high temperature. Said portion 26 melts instantaneously, which allows it to be processed as desired. To prevent powder, dust or the like generated by the portion to be processed from entering the reflecting surface 13, a protective glass 23 is fixed in the opening portion 13a by means of a glass retaining member 24 which is fixed to the reflecting mirror 12 by means of a thread screw 25.

When employing the spot heater in accordance with the present invention as a hand-held device, a suitable position such as sleeve 7 of the spot heater is selected to be carried with one hand and an toggle switch for lamp 16 is switched to turn on the lamp at low output, thereby allowing a light beam of low output to irradiate from lamp 16. In addition, a switch for fan motor 4 is actuated so as to rotate fan 2, whereby external air is forcibly sucked in through the air intake port 5. The cooling air sucked in in such a manner flows around the fan motor 4 and, after passing the air passages 21, is exhausted farther down through the air exhaust ports 21.

Thus, if processing is to commence, the light beam 27 irradiated from the spot heater is approached towards and focused on the portion 26 to be processed, the toggle switch of the lamp is switched to high output, whereby the light beam 27 reaches a temperature of 800°C or more during the local irradiation so as to enable instant soldering. During the soldering work the external air sucked in through the air intake port 5 passes around the fan motor 4 and flows to the air passages 21 while cooling the fan motor 4. When the cooling air flows into the air passages 21 the reflecting mirror 12 is cooled by the fins 19 which are formed on the whole outer peripheral surface of the reflecting mirror 12 and which are provided with a large surface so as to promote the cooling effect.

The cooling air flowing through air passages 21 and cooling the reflecting mirror 12 is exhausted through the air exhaust port 22 to a position away from the portion 26 to be processed. Although the cooling air passing through the air passages 21 cools the mirror casing 7b, the light beam 27 nevertheless retains the required heat for processing portion 26. The mirror casing 7b is designed in such a way that the heat of the reflecting mirror 12 is not transmitted onto the mirror casing 7b because of an air layer provided in the air passages 21. This enables the sleeve 7 to be carried by hand. As the cooling air exhausted from the air exhaust port 22 is exhausted to a position away from portion 26, there is no adverse effect on the portion 26 which requires a high amount of heat.

When, for example, it is necessary to exchange lamp 16, the fixing screws 3 and 11 are removed from the outer cylinder 1. This releases the fan motor 4 and the tension of the lamp retaining screw 18 is released. Furthermore, by removing the fixing screw 20 from sleeve 7 it is possible to easily remove sleeve 7 from the outer cylinder 1. As shown in Fig. 1, the reflecting mirror 12 is extracted from the mirror casing 7b in a downward direction and the lamp base 17 is pulled out of the reflecting mirror 12. Thereafter, the lamp base 17 is replaced by one containing a new lamp. In this case the cord or the like 9 should also be replaced together with the lamp. After this operation the packing material 10 is removed from the opening portion 8, preserving a condition that allows the insertion of fingertips into opening portion 8 to carry out the work. Having completed the replacement of the lamp, the reassembly of the lamp is carried out in the reverse order so as to achieve the condition as described above and as shown in Fig. 1.

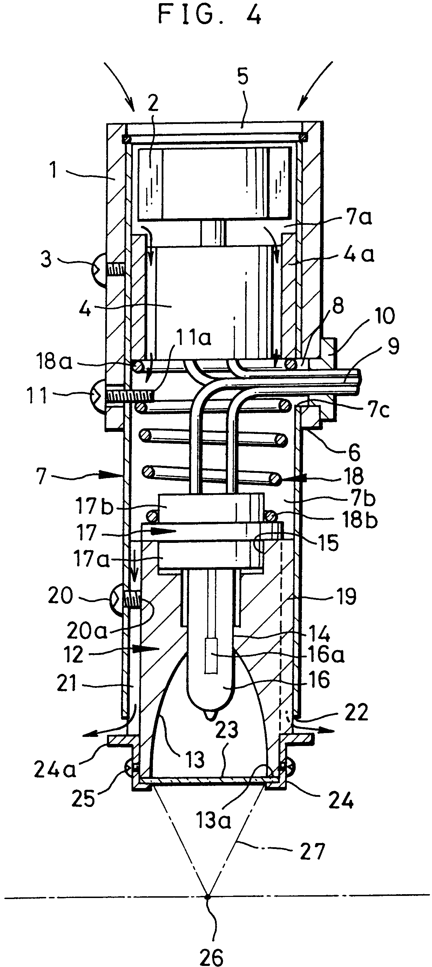

Pursuant to a second embodiment as shown in Fig. 4, the present invention realizes a structure in which the cooling air passing through the air passages 21 and exhausted from the air exhaust port 22 is exhausted at a position farther away from the processing portion 26. As shown in Fig. 4, the upper edge of the glass retaining member is provided with a relatively long length and it is brought into contact with an edge of the air passage 21 where it is bent in the horizontal direction to a form a guide member 24a. Said member allows the cooling air exhausted from the air exhaust port 22 to escape forcibly in the horizontal direction, whereby the air is to exhaust to a position that is situated farther away from the processing portion 26. As the remaining arrangement and operation of this embodiment are identical to that of the first embodiment mentioned above, identical reference signs will be used for identical parts and the description of these parts will be abbreviated.

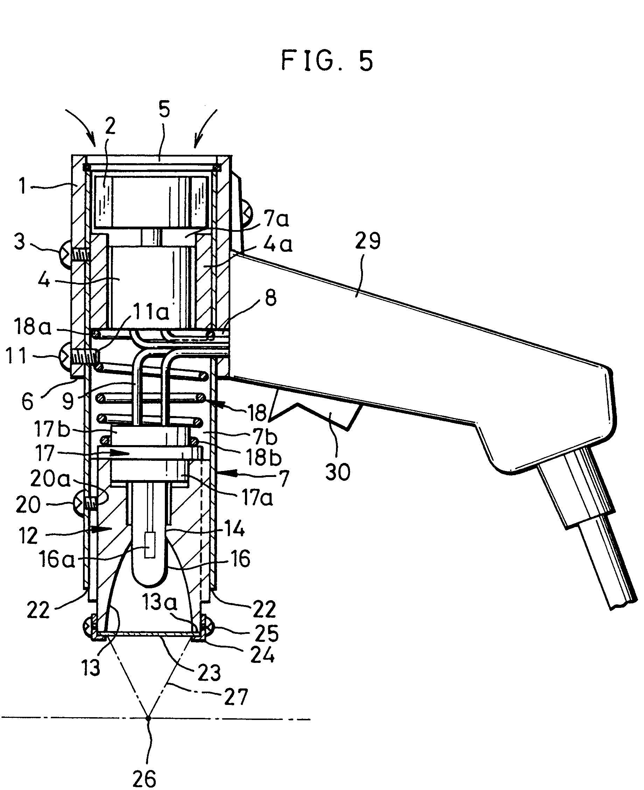

Furthermore, according to a third embodiment as shown in Fig. 5, the present invention may comprise a structure which provides the spot heater with better gripping qualities than the embodiments mentioned above. Said structure comprises a handle 29 attached to the outer cylinder 1. According to this embodiment and because the toggle switch 30 of the lamp 16 can be remote controlled in a condition where the handle is carried by hand, it is easier to handle than compared with spot heaters of the embodiments mentioned above. As the remaining arrangement and operation of this embodiment are identical to that of each of the embodiments mentioned above, identical reference signs will be used for identical parts and the description of these parts will be abbreviated.

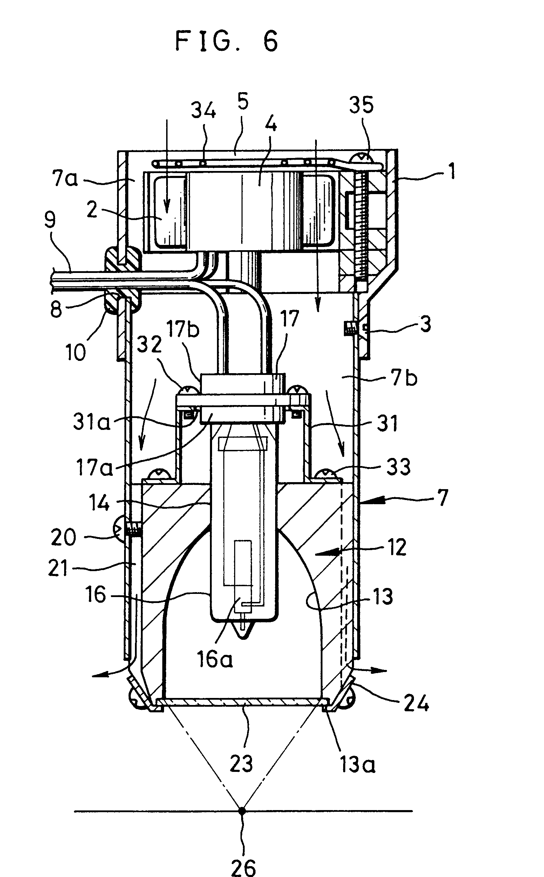

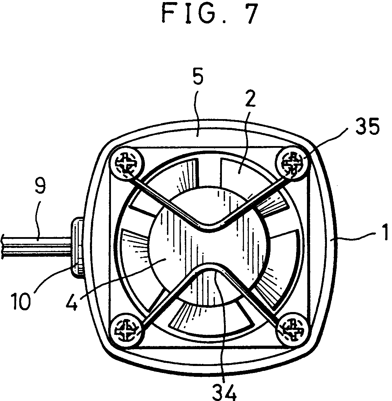

A fourth embodiment of the invention is represented in Figures 6 and 7. This embodiment uses a lamp 16 which generates energy of higher heat that the lamp 16 in each of the previous embodiments. In addition, the supporting structure of the lamp base 17 differs from each of the embodiments mentioned above, i.e., the lamp base 17 is fixed to one end of a lamp supporting member 31 formed in a substantially Z-like shape by means of a thread screw 32 and the other end of the supporting member 31 is fixed to the reflecting mirror 12 by means of a thread screw 33. Accordingly, the first limiting means is formed by fitting a lower projecting portion 17a of the lamp base 17 into a limiting bore 31a of the supporting member 31. The second limiting means is formed by inserting the lamp 16 into the lamp insertion bore 14 similar to each of the embodiments mentioned above. Above the fan 2 there is provided a fan guard 34 placed at the air intake port 5 of the outer cylinder 1, which is attached by screwing a thread screw 35 into the outer cylinder 1. As the remaining arragments of this embodiment are identical to that of each of the embodiments mentioned above, identical reference signs will be used for identical parts and the description of these parts will be abbreviated.

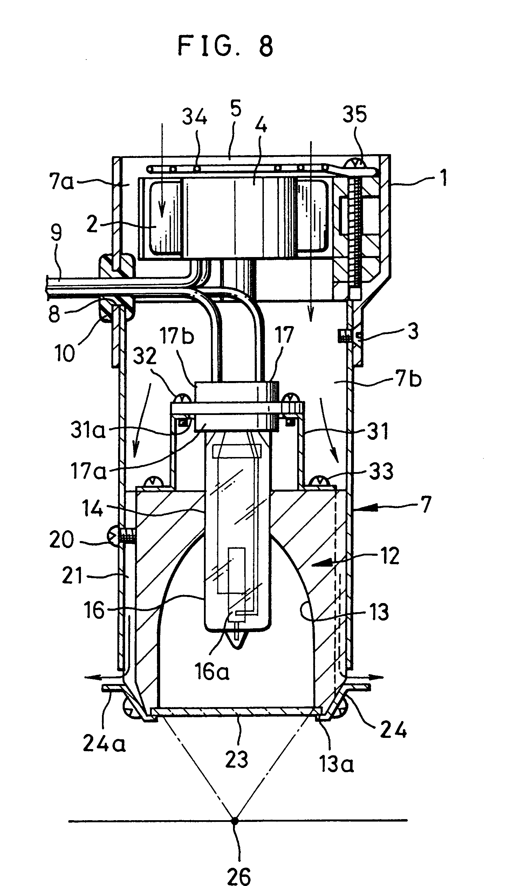

Finally, a fifth embodiment of the present invention is described below with reference to Figure 8. As shown in Fig. 8, after the upper edge of the relatively long glass retaining member 24 comes into contact with an edge of the air passage 21, it is bent in the horizontal direction to form a guide member 24a. Said guide member allows the cooling air exhausted from the air exhaust port 22 to escape forcibly in the horizontal direction with the air being exhausted to a position farther away from the processing portion 26. As the remaining arrangement and operation of this embodiment are identical to those of the fourth embodiment mentioned above, identical reference signs will be used for identical parts and the description of these parts will be abbreviated.

### EFFECT OF THE INVENTION

The present invention is designed to forcibly suck in air for cooling from an air intake port by means of a fan provided in a motor casing, to supply such cooling air to a lamp base fixed to a reflecting mirror and to a fan motor, and to further supply such cooling air to air passages provided on the reflecting mirror so as to cool the entirety of the reflecting mirror, and to exhaust the air after cooling from an air exhaust port to a position away from the portion to be processed, so that an adverse influence on the portion to be processed can be prevented. This is achieved by diverting the cooling air from said portion. Because the cooling air is forcibly sucked into spot heater at one side during the soldering operation and it is allowed to efficiently cool the reflecting mirror during its passage and to be exhausted to a position away from the portion to be processed, it is unnecessary to provide a circulating arrangement for cooling water in the spot heater, which provides it with a compact and light design.

## Claims

1. A spot heater of the self-cooling type used for instantaneous soldering by irradiating a light beam from a heat source placed in a reflecting surface of a reflecting mirror to a portion to be processed, comprising:
a sleeve detachably inserted into an outer cylinder having an air intake port for cooling air, said sleeve being provided with a shape opening out at its two ends and being used as a motor casing for containing a fan motor at the air intake port end and a mirror casing for containing the reflecting mirror at the opposite end thereof;
a large number of fins extending in the outer radial and vertical direction of the reflecting mirror contained in the mirror casing;
air passages for cooling communicating with said air intake port and being defined by said cooling fins and said mirror casing along the vertical direction;
a reflecting opening surface of said reflecting mirror adapted to project outwardly from an exhaust port of said passage;
a lamp base unified with a lamp which is detachably inserted into a lamp holding portion formed in said reflecting mirror; and
a fixing means for detachably fixing said lamp base to said reflecting mirror.

2. A spot heater of the self-cooling type as claimed in claim 1, wherein said sleeve is provided with openings at both ends and said motor casing formed in the upper half of said sleeve is inserted into said outer cylinder with a fixing screw being screwed into said motor casing from said outer cylinder in said inserted portion.

3. A spot heater of the self-cooling type as claimed in claim 1, wherein said fixing means for fixing the lamp base detachably inserted into said reflecting mirror is a lamp retaining spring interposed between said lamp base and said fan motor, whereby the lamp retaining spring has a larger diameter at the fan motor side and a smaller diameter at the lamp base side so as to form a substantially conical shape.

4. A spot heater of the self-cooling type as claimed in claim 1, wherein said lamp retaining spring is engaged at its side with the larger diameter with an inner end portion of a stop screw screwed through said sleeve with the resilient force between said engaged portion and said lamp base being constantly maintained.

5. A spot heater of the self-cooling type as claimed in claim 1, wherein said lamp base has an upper and a lower projecting portion, and a near infrared lamp or halogen lamp as a heat source which is mounted integrally on the lower projecting portion so as to provide the arrangement as an integral unit.

6. A spot heater of the self-cooling type as claimed in claim 1, wherein said lamp base and said lamp situated on said reflecting mirror are adapted to limit their movement along a vertical central axis by means of a first position limiting means and a second position limiting means.

7. A spot heater of the self-cooling type as claimed in claim 1 or claim 6, wherein said first position limiting means is formed by a combination of a concave recess disposed in the upper surface of said reflecting mirror and said lower projecting portion of said lamp base.

8. A spot heater of the self-cooling type as claimed in claim 1 or claim 6, wherein said second position limiting means is formed by a combination of a lamp insertion bore provided in the centre portion of said reflecting mirror and said lamp.

9. A spot heater of the self-cooling type as claimed in claim 1 or 6, wherein the diameter of said lamp insertion bore is substantially equal to or slightly smaller than the outer diameter of said lamp.

10. A spot heater of the self-cooling type as claimed in claim 1 or claim 2, wherein said reflecting mirror which is detachably placed in said mirror casing is arranged in such a way that an inner end portion of a fixing screw inserted from the outside of said mirror casing is pressed onto an inner surface of an air passage vertically formed on the outer peripheral surface of said reflecting mirror.

11. A spot heater of the self-cooling type as claimed in claim 1 or claim 10, wherein cords or the like of said fan motor, which is detachably placed in said motor casing, and of said lamp base, which is detachably placed in said mirror casing, are led to the outside through relatively large opening portions provided in said outer cylinder and said fan casing.

12. A spot heater of the self-cooling type as claimed in claim 1 or claim 11, wherein an airtight seal is detachably placed in said opening portion provided for the cords or the like in the outer cylinder, said cords or the like passing through said airtight seal.

13. A spot heater of the self-cooling type as claimed in claim 1 or claim 11, wherein a glass retaining member for retaining a protective glass placed on an opening surface of said reflecting mirror is arranged in such a way that an edge portion of the side opposite of the side retaining the glass is provided as a guide member which forcibly guides air exhausted through the air exhaust port to a position situated away from the position to be processed.

14. A spot heater of the self-cooling type as claimed in claim 1, wherein a handle is detachably provided at the opening portion for leading out the cords or the like from said outer cylinder.

15. A spot heater of the self-cooling type as claimed in claim 1 and claim 3, wherein said fixing means for fixing the lamp base comprises a supporting member with a limiting bore which is matched to said lower projecting portion of said lamp base, a thread screw for screwing said supporting member to said lamp base and a thread screw for screwing said supporting member to said reflecting member.

16. A spot heater of the self-cooling type as claimed in claim 15, wherein said first position limiting means for the lamp base comprises a combination of the lower projecting portion of said lamp base and a limiting bore of said supporting member.
